# EUROPÄISCHE PATENTANMELDUNG

(11) **EP 0 883 321 A2**
(43) Veröffentlichungstag der Anmeldung: **09.12.1998**
(21) Anmeldenummer: 98108474.2
(22) Anmeldetag: 09.05.1998
(51) Int. Cl.: H04Q 11/00

(54) **Verfahren zur netzübergreifenden elektronischen Datenübertragung**

(30) Priorität: 13.05.1997 DE 19719820
(71) Anmelder: Global Business & Professionale Holding B.V., 1007 JG Amsterdam (NL)
(72) Erfinder: Leusch, Holger, 77815 Bühl (DE); Heinkelmann, Klaus, 76540 Lörrach (DE)
(74) Vertreter: Naumann, Ulrich, Dr.-Ing.

(57) **Zusammenfassung**

Ein Verfahren zur netzübergreifenden elektronischen Datenübertragung zwischen einem A-Teilnehmer (Kunde) (1) und einem B-Teilnehmer (2), insbesondere zur netzübergreifenden Vermittlung von Telefongesprächen, wobei mindestens zwei Kanäle - Datenkanal (5) und Signalisierungskanal (6) - zur Verfügung stehen, ist zum schnelleren Verbindungsaufbau derart ausgebildet, daß mit der Wahl der B-Teilnehmernummer (7) durch den A-Teilnehmer (1) Wahlparameter (8) gemeinsam mit einer den A-Teilnehmer (1) betreffenden Kundenidentifikation (Setup-Nachricht) über den Signalisierungskanal (6) an einen Knotenrechner (9) geleitet werden und daß der Knotenrechner (9) die Verbindung über mindestens einen vorgebbaren Netzübergang (10) zum B-Teilnehmer (2) aufbaut.

## Beschreibung

Die vorliegende Erfindung betrifft ein Verfahren zur netzübergreifenden elektronischen Datenübertragung zwischen einem A-Teilnehmer (Kunde) und einem B-Teilnehmer, insbesondere zur netzübergreifenden Vermittlung von Telefongesprächen, wobei mindestens zwei Kanäle - Datenkanal und Signalisierungskanal - zur Verfügung stehen.

Grundsätzlich handelt es sich hier um ein Verfahren zur Endkundenanbindung ("last mile"), wobei es grundsätzlich um die elektronische Datenübertragung jedweder Art und jedweden Inhalts geht. Insbesondere betrifft dies die Telekommunikation im weitesten Sinne, insbesondere die Telefonie.

Aus der Praxis sind bereits zwei grundliegende Verfahren zur Endkundenanbindung bekannt, nämlich die sogenannten Call-Back- und Dial-In-Verfahren, die vom Prinzip her wie folgt funktionieren:

### Dial-In:

A-Teilnehmer (Kunde) >>>> Ortsnetz Carrier >>>> Switch ggf. im Ortsnetz >>>> MFS/Worldcom >>>> B-Teilnehmer weltweit

### Call Back:

A-Teilnehmer (Kunde) <<<< intl. ISDN-Netzt <<<< Switch (beliebige Location) >>>> intl. ISDN-Netz >>>> B-Teilnehmer weltweit

Die großen Anbieter privater Netze (Carrier) beabsichtigen, das "Interconnect"-Verfahren zu benutzen, wonach man als Subscriber über die Vorwahl einer Carrierkennziffer von jeder Ortsvermittlungsstelle des öffentlichen Telekommunikationsnetzes (hier der Telekom) aus über das private Telefonnetz telefonieren bzw. Daten übertragen kann. Dazu wird keinerlei Netzzugangstechnologie benötigt. Man schließt lediglich einen Vertrag mit dem Carrier, d.h. mit dem Telekom-Konkurenten ab und erhält über die Carrierkennziffer Zugang.

Das zuvor genannte Verfahren ist jedoch aufwendig und daher teuer, zumal der Anbieter Inhaber einer Lizenz sein muß und über ein landesweit (aus deutscher Sicht bundesweit) flächendeckendes Telefonnetz verfügen sollte. Insoweit haben die Erfahrungen in anderen im Telekommunikationsbereich liberalisierten Ländern gezeigt, daß es "Back Up Carrier" leichter haben, dem Kunden einen attraktiven Preis für die gewünschte Telekommunikation zu bieten, als dies seitens der großen Anbieter mit dem dort meist vorhandenen überlasteten Overhead möglich ist.

Die praktizierten Dial-In- und Call-Back-Verfahren zur Endkundenanbindung sind jedoch in der Praxis insoweit äußerst problematisch, als dort der Aufbau der Verbindung zwischen einem Kunden, dem A-Teilnehmer, und einem B-Teilnehmer eine zu große Zeitspanne in Anspruch nimmt. Insoweit sind diese Verfahren jedenfalls im gewerblichen Bereich nur bedingt anwendbar.

Der vorliegenden Erfindung liegt daher die Aufgabe zugrunde, ein Verfahren zur elektronischen Datenübertragung bzw. zur Endkundenanbindung derart auszugestalten und weiterzubilden, wonach die zum Verbindungsaufbau erforderliche Zeitspanne auf ein auch im gewerblichen Bereich akzeptables Maß reduziert ist.

Das erfindungsgemäße Verfahren löst die voranstehende Aufgabe durch die Merkmale des Patentanspruches 1. Danach ist das eingangs bereits erörterte gattungsbildende Verfahren zur netzübergreifenden elektronischen Datenverarbeitung zwischen einem A-Teilnehmer (Kunde) und einem B-Teilnehmer, insbesondere zur netzübergreifenden Vermittlung von Telefongesprächen, derart ausgestaltet, daß mit der Wahl der B-Teilnehmernummer durch den A-Teilnehmer Wahlparameter gemeinsam mit einer den A-Teilnehmer betreffenden Kundenidentifikation (Setup-Nachricht) über den Signalisierungskanal an einem Knotenrechner geleitet werden und daß der Knotenrechner die Verbindung über mindestens einen vorgebbaren Netzübergang zum B-Teilnehmer aufbaut.

Erfindungsgemäß ist erkannt worden, daß man mit der Wahl der B-Teilnehmernummer durch den A-Teilnehmer, d.h. durch den Kunden, gleichzeitig Wahlparameter gemeinsam mit einer den A-Teilnehmer betreffenden Kundenidentifikation übermitteln kann, wobei das "Paket" aus Wahlparameter und Kundenidentifikation als Setup-Nachricht bezeichnet wird. Die Übermittlung dieser Setup-Nachricht erfolgt nicht etwa über den Datenkanal, sondern über einen separaten zweiten Kanal, nämlich über den Signalisierungskanal und wird an einen Knotenrechner geleitet. Dieser Knotenrechner baut dann die Verbindung über mindestens einen vorgebbaren Netzübergang zum B-Teilnehmer auf, wobei hier eben wesentlich ist, daß die Setup-Nachricht über den separaten Signalisierungskanal an den Knotenrechner übermittelt wird.

Im konkreten könnte die Übertragung der Setup-Nachricht (Wahlparameter und Kundenidentifikation) über ein zwischen der Telekommunikationsanlage des A-Teilnehmers (Kunde) und dem öffentlichen Netz geschaltetes intelligentes bzw. rechnergestützes Modul erfolgen, wobei es sich hierbei für den Kunden um eine Art Black Box handelt, die landläufig auch als Dialer, Least Cost Routing Modul oder auch als Router bezeichnet wird. Im hier vorliegenden Fall könte man von einem intelligenten NT (Network Terminator) sprechen.

Für das Modul ist jedenfalls wesentlich, daß es zwischen dem Endgerät des Kunden - PBX (Public Branch Exchange), beispielsweise eine ISDN-TK-Anlage - und dem Netz (PSTN = Public Switched Telephone Network) des Betreibers des öffentlichen Netzwerkes, hier die Telekom, geschaltet wird.

Bei dem "intelligenten" Modul handelt es sich - wie bereits ausgeführt - um ein rechnergestütztes Modul mit Speicherkapazität, welches anhand der gewählten B-Teilnehmernummer und unter Berücksichtigung der vom Carrier vorgebbaren Parameter entscheidet, ob die Verbindung in herkömmlicher Weise über das verfügbare öffentliche Netz oder netzübergreifend vorzugsweise über einen privaten Netzübergang hergestellt wird. Als Entscheidungskriterium wird hier die Kostensituation berücksichtigt, so daß immer dann netzübergreifend über einen privaten Netzübergang verbunden wird, wenn dies einen Preisvorteil bringt. Dies ist meist bei interessanten Zielbereichen im Ausland bzw. in Fernzonen oder in Funknetzen der Fall.

Nach einer Entscheidung für eine netzübergreifende Verbindung wird dann die Verbindung nach dem Dial-In-Verfahren oder dem Call-Back-Verfahren hergestellt, wobei die über den separaten Kanal übermittelte Setup-Nachricht der Verbindung zugrunde liegt.

Nach dem Dial-In-Verfahren wird nun in ganz besonders vorteilhafter Weise die vom A-Teilnehmer gewählte B-Teilnehmernummer im Modul gespeichert. Dann wird der nächstgelegene Knotenrechner angewählt, wobei dieser in geographischer Nähe zum A-Teilnehmer bzw. zum Kunden liegen sollte, so daß diese Anwahl zum Orts- bzw. Citytarif erfolgen kann. Die Setup-Nachricht (B-Teilnehmernummer und Kundenidentifikation) wird über den Signalisierungskanal übertragen, wobei diese Übertragung der Setup-Nachricht ganz oder teilweise in verschlüsselter Form erfolgen kann.

Der Knotenrechner bzw. Vermittlungsrechner baut nun die Verbindung anhand der in der Setup-Nachricht enthaltenen Daten über den vorgebbaren "privaten" Netzübergang zum B-Teilnehmer auf.

Sobald nun der B-Teilnehmer die Verbindung annimmt bzw. im Falle eines Telefongespräches abhebt, nimmt der Knotenrechner den vom Modul kommenden Verbindungswunsch an und die Ortsverbindung zwischen dem Modul zum Netzknoten wird hergestellt. Nimmt der B-Teilnehmer dagegen die Verbindung nicht an bzw. hebt der B-Teilnehmer im Falle einer Telefonverbindung nicht ab, so wird die Ortsverbindung von dem Modul zum Netzknoten nicht hergestellt.

Alternativ zu dem zuvor dargestellten Dial-In-Verfahren könnte die Verbindung ebenso mittels des Call-Back-Verfahrens hergestellt werden, und zwar ebenfalls unter Nutzung der über den separaten Signalisierungskanal übermittelten Setup-Nachricht. Dazu würde das Modul die Setup-Nachricht an einen Netzknoten zum Netzübergang vorzugsweise zu paketvermittelnden Netzen übermitteln. Der Verbindungswunsch des A-Teilnehmers wird dann von einem Rechner vorzugsweise in dem privaten Netz aufgenommen. In dem Rechner wird die Verbindungsanforderung des A-Teilnehmers nach vorgebbaren Kriterien, d.h. nach geeigneten Kriterien, geprüft. Die geprüfte Verbindungsanforderung wird an einen Vermittlungsknoten übertragen. Von dem Vermittlungsknoten aus wird dann gleichzeitig eine Datenverbindung bzw. Sprachverbindung zum anfordernden Modul und zum B-Teilnehmer aufgebaut. Beide Verbindungen werden schließlich in einem Koppelfeld des Vermittlungsknotens zusammengeschaltet.

In weiter vorteilhafter Weise wird die Verbindung zwischen dem Vermittlungsknoten und dem Modul auf eine in dem Modul definierte, in der Telekommunikationsanlage des A-Teilnehmers nicht verwendete Nebenstelle gelegt und mit der gehaltenen Verbindung mit dem A-Teilnehmer in dem Modul zusammengeschaltet. Dabei wird zur Vermeidung von Verbindungskonflikten je einem durch das Modul geschleiften Datenkanal in dem Modul eine Nebenstellennummer zugeordnet.

Des weiteren sei ganz besonders darauf hingewiesen, daß es sich bei den hier erforderlichen Kanälen - Datenkanal und Signalisierungskanal - um den B-Kanal und D-Kanal des ISDN-Netzes bzw. des Euro-ISDN-Netzes, handeln kann. Insoweit wird die Setup-Nachricht über ISDN-Merkmale wie Subadressing, User-to-User Data oder X.31 übermittelt, wobei der D-Kanal-Dienst "Netzübergang zu paketvermittelnden Netzen" beim Kunden eingerichtet wird.

Schließlich sei ganz besonders darauf hingewiesen, daß der komplette Verbindungsaufbau unter Nutzung des separaten Signalisierungskanals zur Übermittlung der Setup-Nachricht in weniger als zwei Sekunden erfolgt.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen des beanspruchten Verfahrens erläutert. In der Zeichnung zeigt
- Fig. 1: in einer schematischen Darstellung, als Übersicht, ein konkretes Ausführungsbeispiel des erfindungsgemäßen Verfahrens,
- Fig. 2: in einer schematischen Darstellung die Übermittlung der Setup-Nachricht zur anschließenden Verbindung und
- Fig. 3: in einer schematischen Darstellung die aufgrund der Setup-Nachricht aufgebaute Verbindung gemäß Call-Back-Verfahren,
wobei in der Zeichnung
- PSTN =: Public Switched Telephone Network
- EDSS1 =: European Digital Signalling System One (Euro-ISDN)
- PBX =: Public Branch Exchange
- iNT =: intelligent Network Termination (Dial-Up-Box)
- X.31 =: X.25 via D-Channel
- SO =: 2 x Basic Rate
- S2M =: Primary Rate
- SS No.7 =: Signalling System No.7
- Packet Handler =: Gateway to public or private Data Networks
- CTI =: Computer-Telephone Integration

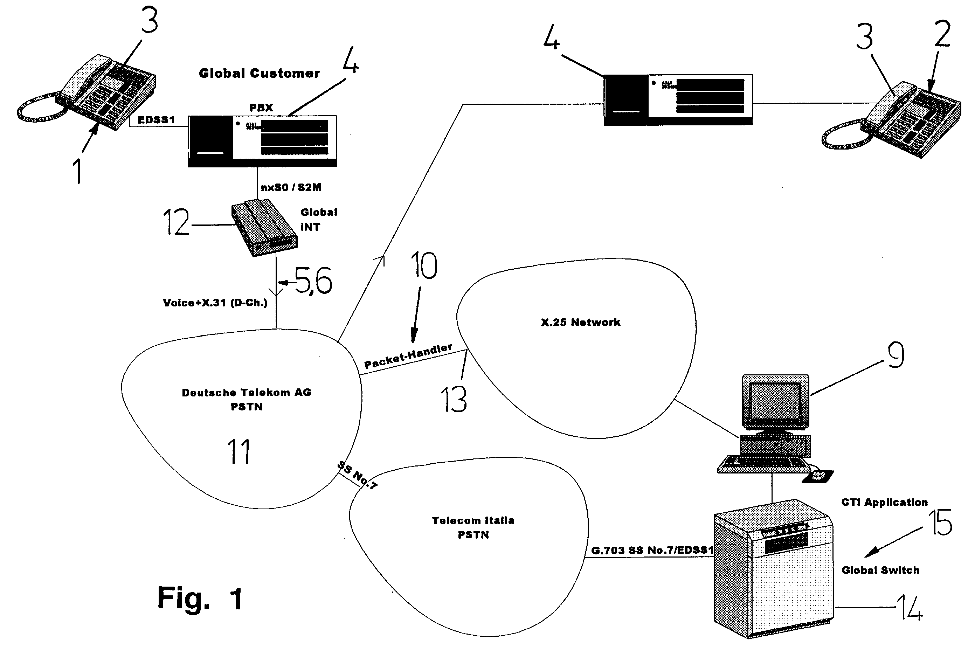

Fig. 1 zeigt in einer schematischen Übersicht die Funktionsweise des erfindungsgemäßen Verfahrens zur netzübergreifenden elektronischen Datenübertragung, wobei es sich hier um eine Telefonverbindung zwischen einem Kunden, dem A-Teilnehmer 1, und einem B-Teilnehmer 2 handelt. Beide Teilnehmer 1, 2 verfügen je über ein Endgerät bzw. Telefonapparat 3 sowie über eine Telekommunikationsanlage 4 für den Zugang in ein digitales Netz, wobei es sich hier um das Euro-ISDN-Netz handelt.

Dieses Netz verfügt über zwei Kanäle, nämlich den Datenkanal (B-Kanal) 5 und den Signalisierungskanal (D-Kanal) 6.

Mit der Wahl der B-Teilnehmernummer 7 durch den A-Teilnehmer 1 werden Wahlparameter 8 gemeinsam mit einer den A-Teilnehmer 1 betreffenden Kundenidentifikation (Setup-Nachricht) über den Signalisierungskanal 6 an einen Knotenrechner 9 geleitet. Der Knotenrechner 9 baut über einen vorgebbaren Netzübergang 10 die Verbindung zum B-Teilnehmer 2 auf.

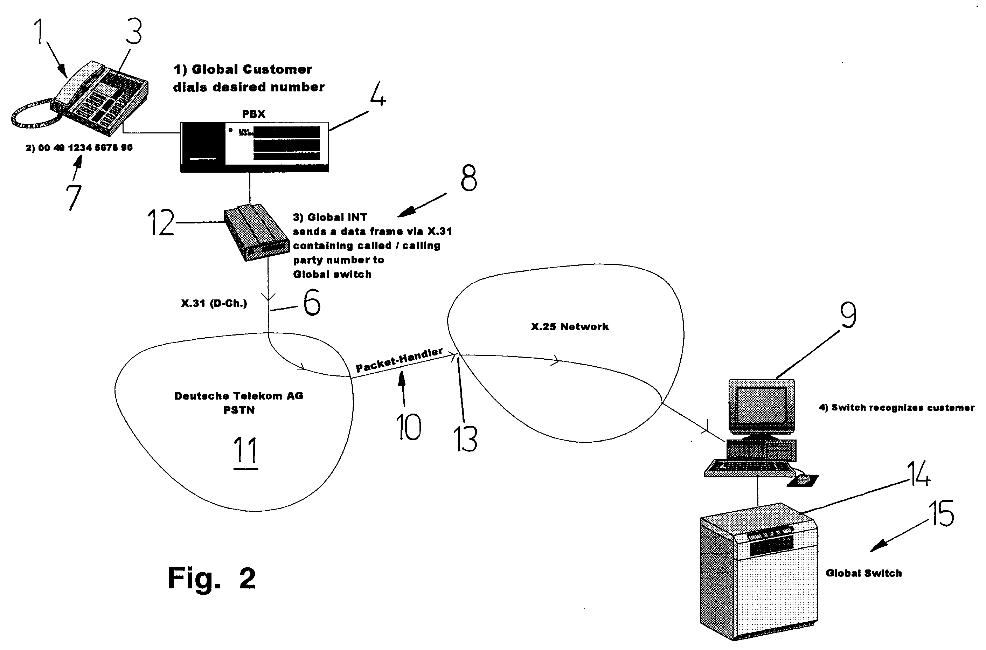

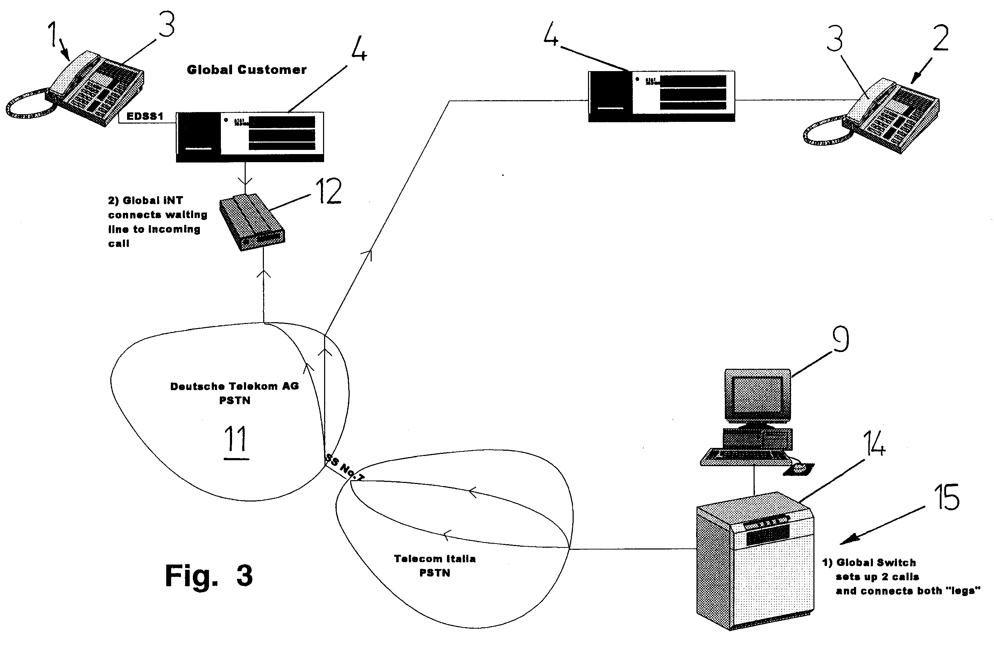

Die Figuren 1 bis 3 zeigen gemeinsam, daß die Übertragung der Setup-Nachricht bzw. der Wahlparameter 8 über ein zwischen der Telekommunikationsanlage 4 des A-Teilnehmers 1 und dem öffentlichten Netz 11 geschaltetes intelligentes Modul 12 erfolgt. Anhand der gewählten B-Teilnehmernummer 7 und unter Berücksichtigung vorgebbarer Parameter entscheidet das Modul 12, ob die Verbindung in herkömmlicher Weise über das zur Verfügung stehende öffentlichte Netz 11 oder netzübergreifend vorzugsweise über einen privaten Netzübergang 10 hergestellt wird. Nach einer Entscheidung für eine netzübergreifende Verbindung kann die Verbindung gemäß der Darstellung in Fig. 3 nach dem Call-Back-Verfahren erfolgen.

Danach übermittelt das Modul 12 die Setup-Nachricht 8 an einen Netzknoten 13 zum Netzübergang zu paketvermittelnden Netzen. Der Verbindungswunsch des A-Teilnehmers 1 wird von einem Rechner 14 in dem privaten Netz aufgenommen. In dem Rechner 14 wird die Verbindungsanforderung des A-Teilnehmers 1 nach vorgebbaren Kriterien geprüft und die geprüfte Verbindungsanforderung wird an einen Vermittlungsknoten 15 übertragen. Von dort aus wird eine Datenverbindung bzw. Sprachverbindung zum anfordernden Modul 12 und zum B-Teilnehmer 2 aufgebaut. Die beiden Verbindungen werden in einem Koppelfeld des Vermittlungsknotens 15 zusammengeschaltet, wobei die Verbindung zwischen dem Vermittlungsknoten 15 und dem Modul 12 auf eine in dem Modul 12 definierte, in der Telekommunikationsanlage 4 des A-Teilnehmers 1 nicht verwendete Nebenstelle gelegt und mit der gehaltenen Verbindung mit dem A-Teilnehmer 1 in dem Modul 12 zusammengeschaltet wird. Zur Vermeidung von Verbindungskonflikten wird je einem durch das Modul 12 geschleiften Datenkanal in dem Modul 12 eine Nebenstellennummer zugeordnet.

Im übrigen wird auf die beschreibenden Bestandteile der Figuren 1 bis 3 verwiesen.

Abschließend sei ganz besonders hervorgehoben, daß das voranstehend lediglich beispielshaft erörterte Ausführungsbeispiel eines erfindungsgemäßen Verfahrens zur Erläuterung der beanspruchten Lehre dient, dieses jedoch nicht auf das rein willkürlich gewählte Ausführungsbeispiel einschränkt.

## Patentansprüche

1. Verfahren zur netzübergreifenden elektronischen Datenübertragung zwischen einem A-Teilnehmer (Kunde) (1) und einem B-Teilnehmer (2), insbesondere zur netzübergreifenden Vermittlung von Telefongesprächen, wobei mindestens zwei Kanäle - Datenkanal (5) und Signalisierungskanal (6) - zur Verfügung stehen,
**dadurch gekennzeichnet**, daß mit der Wahl der B-Teilnehmernummer (7) durch den A-Teilnehmer (1) Wahlparameter (8) gemeinsam mit einer den A-Teilnehmer (1) betreffenden Kundenidentifikation (Setup-Nachricht) über den Signalisierungskanal (6) an einen Knotenrechner (9) geleitet werden und daß der Knotenrechner (9) die Verbindung über mindestens einen vorgebbaren Netzübergang (10) zum B-Teilnehmer (2) aufbaut.

2. Verfahren nach Anspruch 1, dadurch gekennzeichnet, daß die Übertragung der Setup-Nachricht (8) (Wahlparameter und Kundenidentifikation) über ein zwischen der Telekommunikationsanlage (4) des A-Teilnehmers (1) und dem öffentlichen Netz (11) geschaltetes intelligentes bzw. rechnergestütztes Modul (12) erfolgt.

3. Verfahren nach Anspruch 2, dadurch gekennzeichnet, daß das Modul (12) anhand der gewählten B-Teilnehmernummer (7) und unter Berücksichtigung vorgebbarer Parameter entscheidet, ob die Verbindung in herkömmlicher Weise über das zur Verfügung stehende öffentliche Netz (11) oder netzübergreifend vorzugsweise über einen privaten Netzübergang (10) hergestellt wird.

4. Verfahren nach Anspruch 3, dadurch gekennzeichnet, daß nach einer Entscheidung für eine netzübergreifende Verbindung die Verbindung nach dem Dial-In-Verfahren oder dem Call-Back-Verfahren hergestellt wird.

5. Verfahren nach Anspruch 4, dadurch gekennzeichnet, daß das Modul (12) die vom A-Teilnehmer (1) gewählte B-Teilnehmernummer (7) speichert, den nächstgelegenen Knotenrechner (9) möglichst zum Orts- bzw. Citytarif anwählt und die Setup-Nachricht (8) (B-Teilnehmernummer und Kundenidentifikation) überträgt.

6. Verfahren nach Anspruch 5, dadurch gekennzeichnet, daß die Setup-Nachricht (8) ganz oder teilweise in verschlüsselter Form übertragen wird.

7. Verfahren nach Anspruch 5 oder 6, dadurch gekennzeichnet, daß der Knotenrechner (9) die Verbindung anhand der in der Setup-Nachricht (8) enthaltenen Daten über den vorgebbaren Netzübergang (10) zum B-Teilnehmer (2) aufbaut.

8. Verfahren nach Anspruch 7, dadurch gekennzeichnet, daß dann, wenn der B-Teilnehmer (2) die Verbindung annimmt bzw. abhebt, der Knotenrechner (9) den Verbindungswunsch von dem Modul (12) annimmt und die Ortsverbindung von dem Modul (12) zum Netzknoten (13) hergestellt wird.

9. Verfahren nach Anspruch 7, dadurch gekennzeichnet, daß dann, wenn der B-Teilnehmer (2) die Verbindung nicht annimmt bzw. nicht abhebt, die Ortsverbindung von dem Modul (12) zum Netzknoten (13) nicht hergestellt wird.

10. Verfahren nach Anspruch 4, dadurch gekennzeichnet, daß das Modul (12) die Setup-Nachricht (8) an einen Netzknoten (13) zum Netzübergang (10) vorzugsweise zu paketvermittelnden Netzen übermittelt.

11. Verfahren nach Anspruch 10, dadurch gekennzeichnet, daß der Verbindungswunsch des A-Teilnehmers (1) von einem Rechner (14) vorzugsweise in dem privaten Netz aufgenommen wird.

12. Verfahren nach Anspruch 11, dadurch gekennzeichnet, daß in dem Rechner (14) die Verbindungsanforderung des A-Teilnehmers (1) nach vorgebbaren Kriterien geprüft wird.

13. Verfahren nach Anspruch 12, dadurch gekennzeichnet, daß die geprüfte Verbindungsanforderung an einen Vermittlungsknoten (15) übertragen wird.

14. Verfahren nach Anspruch 13, dadurch gekennzeichnet, daß von dem Vermittlungsknoten (15) aus gleichzeitig eine Datenverbindung bzw. Sprachverbindung zum anfordernden Modul (12) und zum B-Teilnehmer (2) aufgebaut wird.

15. Verfahren nach Anspruch 14, dadurch gekennzeichnet, daß beide Verbindungen in einem Koppelfeld des Vermittlungsknotens (15) zusammengeschaltet werden.

16. Verfahren nach Anspruch 15, dadurch gekennzeichnet, daß die Verbindung zwischen dem Vermittlungsknoten (15) und dem Modul (12) auf eine in dem Modul (12) definierte, in der Telekommunikationsanlage (4) des A-Teilnehmers (1) nicht verwendete Nebenstelle gelegt und mit der gehaltenen Verbindung mit dem A-Teilnehmer (1) in dem Modul (12) zusammengeschaltet wird.

17. Verfahren nach Anspruch 16, dadurch gekennzeichnet, daß zur Vermeidung von Verbindungskonflikten je einem durch das Modul (12) geschleiften Datenkanal (5) in dem Modul (12) eine Nebenstellennummer zugeordnet wird.

18. Verfahren nach einem der Ansprüche 1 bis 17, dadurch gekennzeichnet, daß es sich bei den Kanälen - Datenkanal und Signalisierungskanal - (5, 6) um den B-Kanal und den D-Kanal des ISDN-Netzes handelt.

19. Verfahren nach Anspruch 18, dadurch gekennzeichnet, daß die Setup-Nachricht (8) über ISDN-Merkmale wie Subadressing, User-to-User Data oder X.31 übermittelt wird.

20. Verfahren nach einem der Ansprüche 1 bis 19, dadurch gekennzeichnet, daß der komplette Verbindungsaufbau in weniger als zwei Sekunden erfolgt.
